# EUROPEAN PATENT APPLICATION

(11) **EP 2 408 141 A1**
(43) Date of publication of application: **18.01.2012**
(21) Application number: 10169859.5
(22) Date of filing: 16.07.2010
(51) Int. Cl.: H04L 12/12, H04L 12/66, H04L 12/40

(54) **Communication system for use in a vehicle, vehicle comprising a communication system and method for communicating between nodes**

(71) Applicant: NXP B.V., 5656 AG Eindhoven (NL)
(72) Inventor: Elend, Bernd, 5656 AE, Eindhoven (DE)
(74) Representative: Krott, Michel

(57) **Abstract**

The invention relates to a communication system for use in a vehicle. The invention also relates to a vehicle comprising such a communication system. The invention further relates to a method for communicating between nodes in a communication system. According to the invention, a branch of an active star in such a communication system can be put into a selective-sleep mode. If a branch is in the selective-sleep mode, the active star will not forward messages from other branches to the nodes within this branch. The active star monitors for wake-up events relating to these nodes.

## Description

### FIELD OF THE INVENTION

The invention relates to a communication system for use in a vehicle. The invention also relates to a vehicle comprising such a communication system. The invention further relates to a method for communicating between nodes in a communication system.

### BACKGROUND OF THE INVENTION

The FlexRay bus is a deterministic, fault-tolerant and high-speed communication system which has been developed and standardized by an industrial consortium consisting of automobile manufacturers and component suppliers. In modern vehicles a plurality of electronic control units (ECU's) communicate and exchange data in order to improve safety, increase performance, enhance comfort and reduce the environmental impact of the vehicles.

The FlexRay bus, which succeeds the Controller Area Network (CAN) bus, has been designed to meet new challenges in the next generation of vehicles. The standardized FlexRay communication system supports the creation of relatively complex networks between ECU's. However, a problem exists in that all ECU's in such a network are forced to be active, even in case specific groups of ECU's do not need to be active for the proper functioning of a vehicle at a given moment in time. This leads to a high consumption of electrical energy, a high consumption of fuel and consequently a high emission of Carbon Dioxide (CO2).

### SUMMARY OF THE INVENTION

It is an object of the invention to provide a communication system and a method for communicating of the kind set forth, which enable partial networking. More specifically, it is an object to provide a communication system and a method for communicating of the kind set forth, which allow temporary deactivation of electronic control units in case only some of the electronic control units in a network need to be active.

This object is achieved by the communication system according to claim 1 and the method for communicating according to claim 9.

According to the invention, a branch of an active star can be put into a selective-sleep mode. If a branch is in the selective-sleep mode, the active star AS1 will not forward messages from other branches to the nodes within this branch. The active star AS1 merely monitors for wake-up events relating to these nodes. Wake-up events may comprise wake-up requests received from nodes within active branches, which need to be processed by a FlexRay controller that is connected to the active star AS1, and wake-up patterns received from nodes within the branch in the selective-sleep mode. An active branch is defined as a branch that is neither in the selective-sleep mode nor in the sleep mode as defined by the FlexRay specification, nor in a disabled state. Throughout this document an electronic control unit is referred to as a node for the sake of brevity.

According to an aspect of the invention, the active star element is further arranged to block communication to the at least one node within said branch as long as said branch is in the selective-sleep mode, said communication being blocked by not forwarding messages from other branches to the at least one node, and the active star element is further arranged to monitor for a wake-up event relating to the at least one node within said branch. According to another aspect of the invention, the active star element is further arranged to re-enable said branch after receipt of the wake-up event.

In an aspect of the method according to the invention, the active star element blocks the communication by not forwarding messages from other branches to any node within said branch as long as said branch is in the selective-sleep mode. In another aspect of the method according to the invention, the active star element monitors for a wake-up event relating to at least one node within said branch when said branch is in the selective-sleep mode. In a further aspect of the method according to the invention, the active star element re-enables said branch after receipt of the wake-up event.

According to yet a further aspect of the invention, the wake-up event comprises a wake-up request received from a node within an active branch.

According to yet a further aspect of the invention, the wake-up event comprises a wake-up pattern received from a node within said branch.

According to yet a further aspect of the invention, in the event that the wake-up event comprises a wake-up request received from a node within an active branch, the communication system further comprises a microcontroller which is arranged to process the wake-up request and to send a command to the active star element, said command being a command to re-enable the branch in the selective-sleep mode, the active star element is arranged to monitor for said wake-up event by monitoring for said command from the microcontroller.

In a further aspect of the method according to the invention, in the event that the wake-up event comprises a wake-up request received from a node within an active branch, a microcontroller processes the wake-up request and sends a command to the active star element, said command being a command to re-enable the branch in the selective-sleep mode, and said monitoring by the active star element is realized by monitoring for said command from the microcontroller.

According to yet a further aspect of the invention, at least one of the branches comprises a further active star element.

### BRIEF DESCRIPTION OF THE DRAWINGS

The invention will now be described in more detail with reference to the accompanying drawings, in which:
Fig. 1A to Fig. IF show different topologies for FlexRay networks which have an increasing degree of complexity;
Fig. 2A shows an example of a network topology which comprises an active star and a plurality of nodes;
Fig. 2B shows branches of the active star which are in the selective-sleep mode according to the invention;
Fig. 2C shows that the active star re-enabled a branch after a wake-up request received from a node within another branch;
Fig. 2D shows that the active star re-enabled a branch after a wake-up pattern received from a node within the same branch;
Fig. 3A shows an extended state diagram for branches of an active star according to a first implementation of the invention;
Fig. 3B shows an extended state diagram for branches of an active star according to a second implementation of the invention.

### DESCRIPTION OF PREFERRED EMBODIMENTS

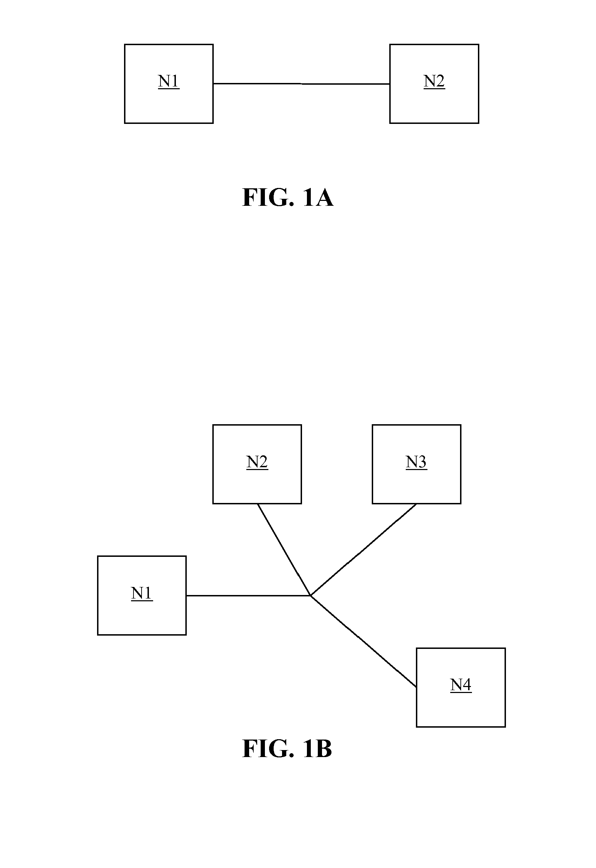

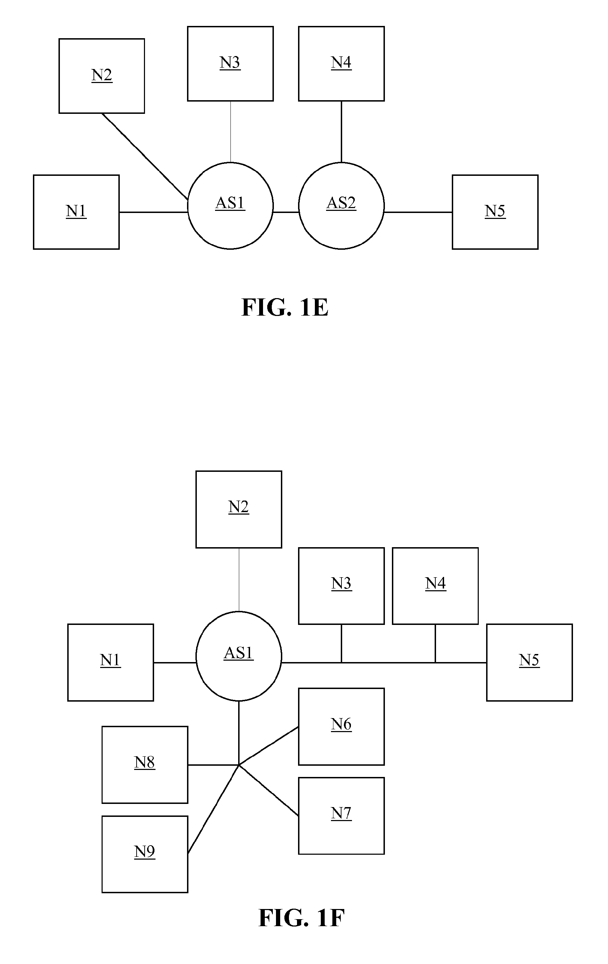

Fig. 1A to Fig. IF show different topologies for FlexRay networks which have an increasing degree of complexity, as described in Chapter 5 of the FlexRay Electrical Physical Layer Specification, Version 3.0, released by the FlexRay Consortium in 2009.
Fig. 1A shows a point-to-point configuration which represents the simplest network. It can be regarded as a basic element for the construction of more complex networks. A first node N1 is connected to a second node N2 via a transmission line which is typically implemented as a dual-wire cable. The first node N1 and the second node N2 are electronic control units (ECU's) within a vehicle.

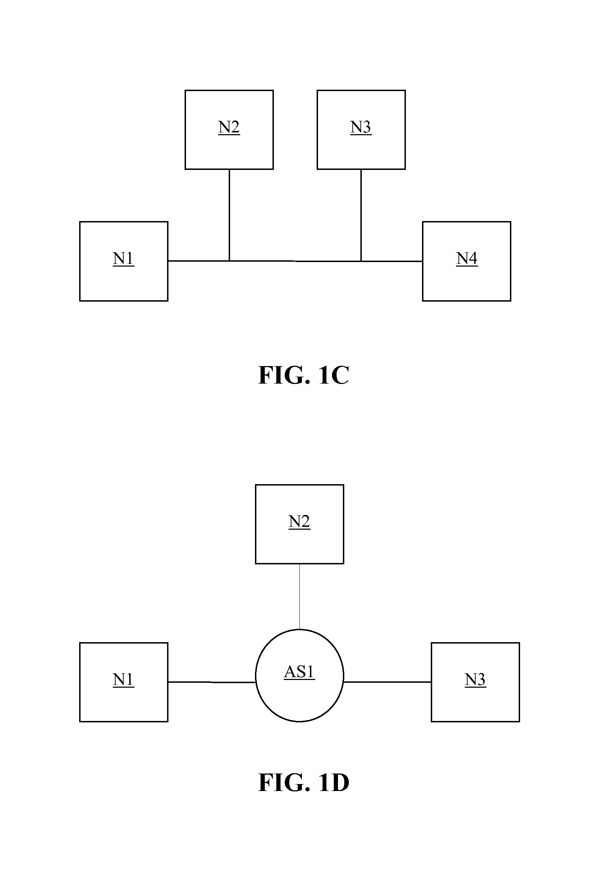

Fig. 1B shows an example of a slightly more complex network which is used to connect more than two electronic control units. In this example the network comprises four nodes N1, N2, N3, N4 connected in a passive star structure. A passive star structure is a special case of a linear passive bus; the latter is shown in Fig. 1C. In a passive star structure all nodes are connected to a single splice. According to the FlexRay specification, a splice is defined as a connection point where three or more transmission lines are plugged together. A linear passive bus structure is shown in Fig. 1C. In the linear passive bus more than one splice can be used to connect the nodes N1, N2, N3, N4.
Fig. 1D shows an active star network in which point-to-point connections are established between at least three nodes N1, N2, N3 and an active star element AS1. According to the FlexRay specification, an active star is defined as an active element (i.e. a component working with power supply and amplifiers) which passes bus signals from one input port to several output ports automatically. An active star is used to refresh the bus signal slopes and levels. Typically a passive net is plugged to each port. A passive net is an implementation of a branch of the active star. A branch of the active star may for instance be formed by a point-to-point connection to a single node, a linear passive bus wherein several nodes are connected, or a passive star structure wherein several nodes are connected.
Fig. 1E shows a cascaded active star structure in which a first active star AS1 is connected to a second active star AS2, a first node N1, a second node N2 and a third node N3 are connected to the first active star AS1, and a fourth node N4 and a fifth node N5 are connected to the second active star AS2.

Finally, Fig. IF shows a hybrid topology comprising an active star AS1 and a plurality of nodes N1 to N9. The active star AS1 is connected to a first node N1 and a second node N2 in an active-star structure. The active star AS1 is connected to a third node N3, a fourth node N4 and a fifth node N5 in a linear-passive-bus structure. The active star AS1 is connected to a sixth node N6, a seventh node N7, an eighth node N8 and a ninth node N9 in a passive-star structure. The hybrid topology combines the topologies described with reference to Fig. 1B, Fig. 1C and Fig. 1D, and supports the creation of complex networks.

According to the invention, a branch of an active star can be put into a selective-sleep mode. If a branch is in the selective-sleep mode, the active star AS1 will not forward messages from other branches to the nodes within this branch. The active star AS1 merely monitors for wake-up events relating to these nodes. Wake-up events comprise both wake-up requests received from nodes within active branches, and wake-up patterns received from nodes within the branch in the selective-sleep mode. An active branch is defined as a branch that is not in the selective-sleep mode. A node is defined as an electronic control unit.

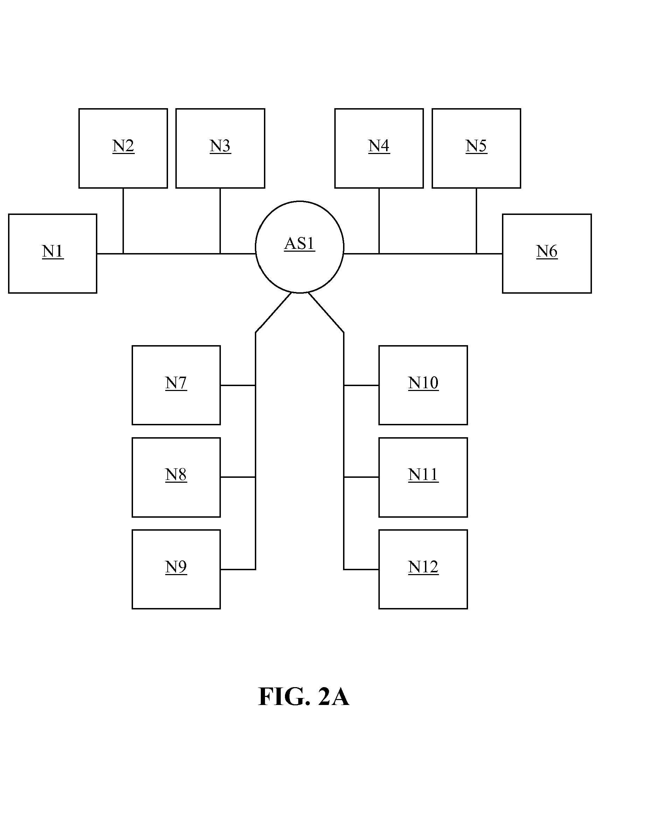

Fig. 2A shows an example of a network topology which comprises an active star AS1 and a plurality of nodes N1 to N12. In this example there are four branches of the active star. Each branch contains three nodes connected to the active star in a linear-passive-bus structure. A first branch contains nodes N1, N2 and N3. A second branch contains nodes N4, N5 and N6. A third branch contains nodes N7, N8 and N9. A fourth branch contains nodes N10, N11 and N12.

It will be appreciated that the invention is not limited to this particular network topology. The branches may, for example, contain a different amount of nodes connected in a different structure, such as a single node connected to the active star in a point-to-point structure or a plurality of nodes connected in a passive-star structure, or a further active star.

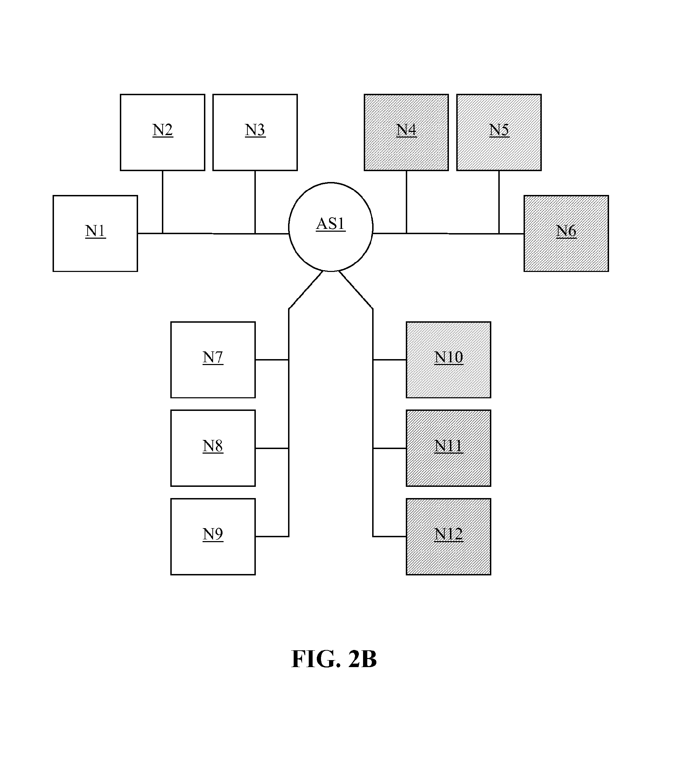

In Fig. 2B two branches of the active star are in the selective-sleep mode according to the invention. The nodes that belong to branches in the selective-sleep mode are depicted as shaded boxes. In this example, the branch containing nodes N4, N5 and N6 is in the selective-sleep mode, as well as the branch containing nodes N10, N11 and N12. All nodes within these branches are virtually in a sleep or standby mode, which means that the nodes N4, N5, N6, N10, N11, and N12 do not send messages to the active star. As the branches are in selective-sleep mode the active star AS 1 does not forward messages from other branches to these nodes. The active star AS 1 merely monitors for wake-up events relating to these nodes.

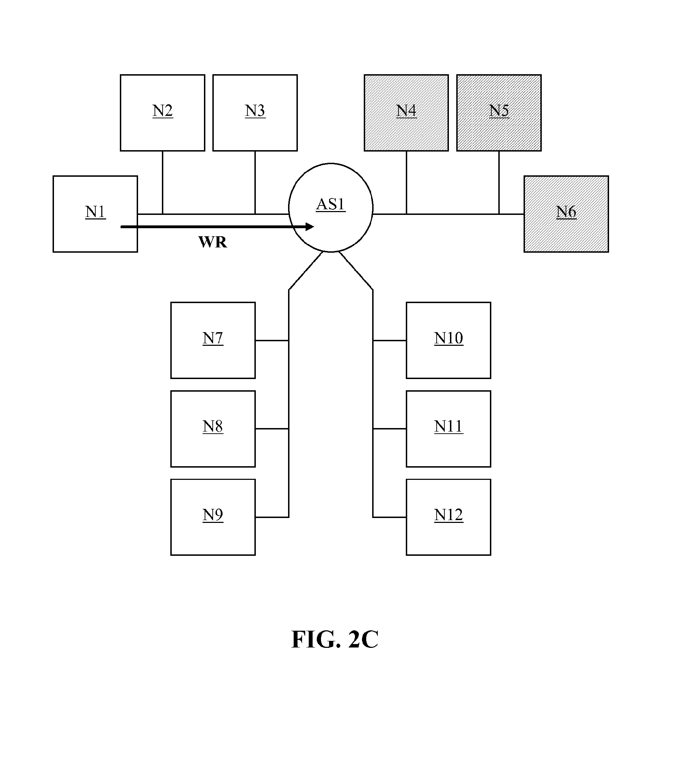

As shown in Fig. 2C, the active star AS1 re-enabled the branch containing nodes N10, N11 and N12 after a wake-up request WR received from node N1. The active star AS1 no longer blocks communication to nodes N10, N11, N12, which means that messages from nodes in other branches are forwarded again to nodes N10, N11 and N12.

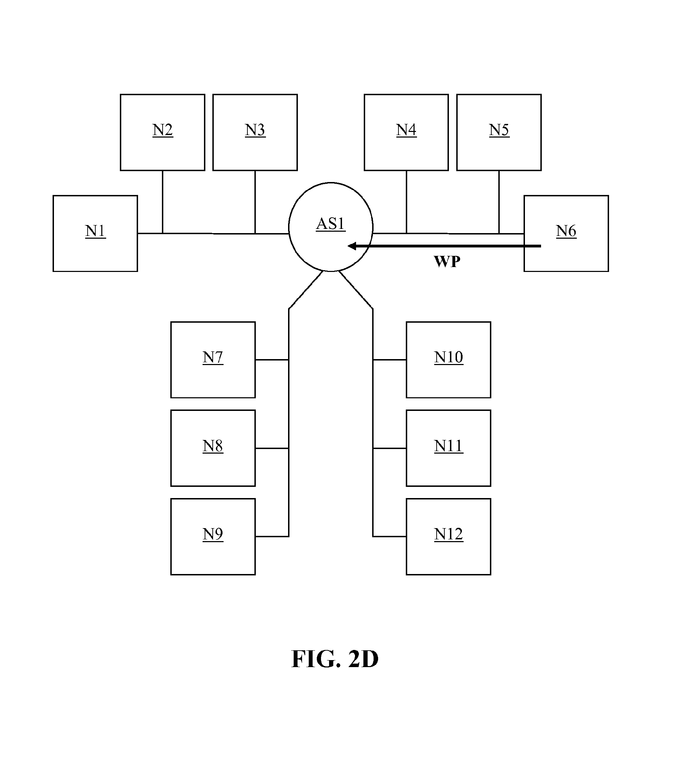

As shown in Fig. 2D, the active star AS1 re-enabled the branch containing nodes N4, N5 and N6 after a wake-up pattern WP received from node N6. A wake-up request from a node within a branch in the selective-sleep mode is referred to as a wake-up pattern or a wake-up frame.

In this example, a node N6 within the branch that is in the selective-sleep mode sends a request to wake-up the branch. The active star AS1 recognizes this request and puts the branch into an error recovery state called "Branch_TxOnly". In this manner the active star AS1 ensures that the wake-up pattern WP does not disturb the ongoing communication of the nodes in other branches and it allows swift integration of the nodes within the re-enabled branch into the FlexRay schedule. The state "Branch_TxOnly" has been defined in the FlexRay Electrical Physical Layer Specification.

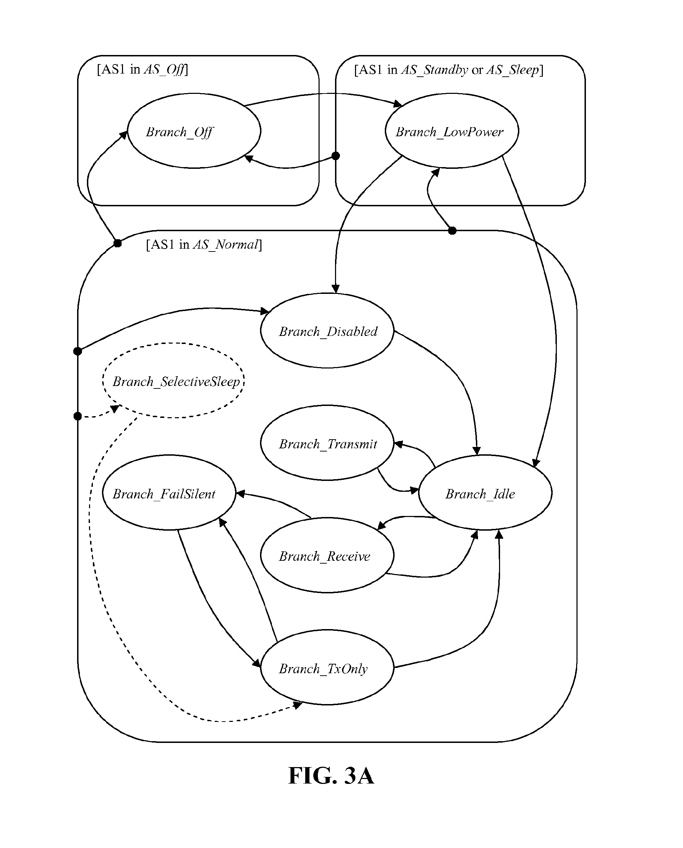

Fig. 3A shows an extended state diagram for branches of an active star according to a first implementation of the invention. The basic state diagram is fully described in paragraph 9.6 of the FlexRay Electrical Physical Layer Specification, Version 3.0. The detailed definitions of the states, the state transitions and the conditions under which the state transitions are performed will not be repeated here for the sake of brevity.

According to the first implementation the state diagram is extended with a new state called "Branch_SelectiveSleep". The state "Branch_SelectiveSleep" can be entered from any state that a branch can be in when the active star AS 1 is in the state "AS_Normal", in other words when the active star is in a normal mode of operation.

The state diagram is further extended with a new state transition starting from the new state "Branch_SelectiveSleep" and ending in the state "Branch_TxOnly". The new state transition is performed after detection of a wake-up event by the active star. The wake-up event may be a wake-up request received from a node within an active branch, or a wake-up pattern received from a node within the branch in the selective-sleep mode. The wake-up request received from an active branch may need to be processed by a microcontroller which in turn sends a command to the active star, for example via a system programming interface. Alternatively, the active star may decode and process the wake-up request autonomously.

In the wording of the FlexRay Electrical Physical Layer Specification, the new state "Branch_SelectiveSleep" is defined as follows:
- receive from and transmit to the bus is not possible in this state, the branch signals "Idle" on the bus;
- the wakeup detector is activated; and
- the branch signals "NoActivity" and "NotReceiveActive" to the "Central_Logic" block in the active star.

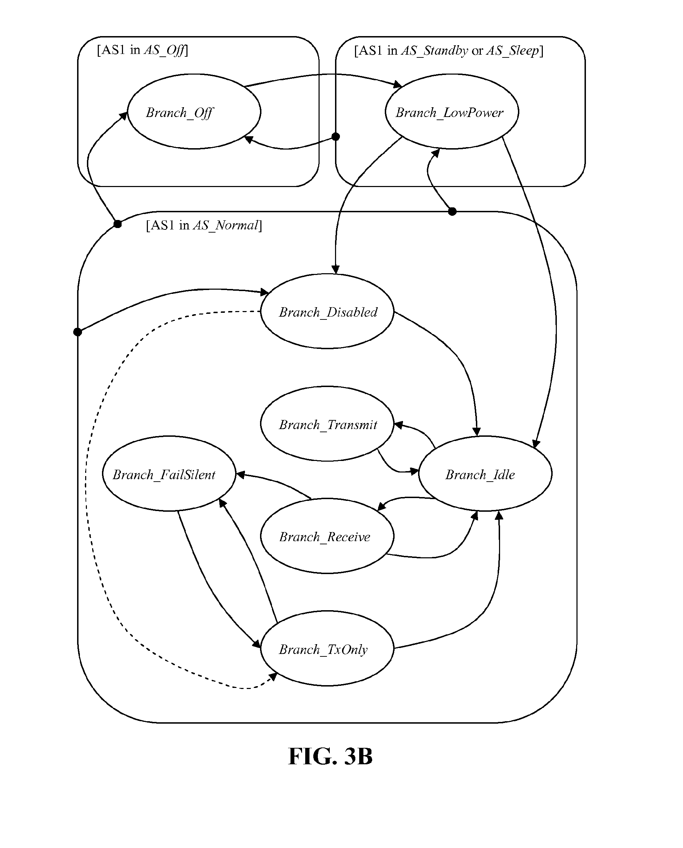

Fig. 3B shows an extended state diagram for branches of an active star according to a second implementation of the invention, wherein the selective-sleep mode functionality is implemented in the existing state "Branch_Disabled". In this implementation the behavior in the state "Branch_Disabled" is changed in such a way that the wake-up detector is active. The state diagram is extended with a new state transition starting from the state "Branch_Disabled" and ending in the state "Branch_TxOnly".

The above-mentioned preferred embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

## Claims

1. A communication system for use in a vehicle,
the communication system comprising an active star element and at least two branches, wherein each branch comprises at least one node,
**characterized in that** the active star element is arranged to put at least one of the branches into a selective-sleep mode.

2. A communication system according to claim 1,
wherein the active star element is further arranged to block communication to the at least one node within said branch as long as said branch is in the selective-sleep mode, said communication being blocked by not forwarding messages from other branches to the at least one node,
and wherein the active star element is further arranged to monitor for a wake-up event relating to the at least one node within said branch.

3. A communication system according to claim 2,
wherein the active star element is further arranged to re-enable said branch after receipt of the wake-up event.

4. A communication system according to claim 2,
wherein the wake-up event comprises a wake-up request received from a node within an active branch.

5. A communication system according to claim 4,
the communication system further comprising a microcontroller, wherein the microcontroller is arranged to process the wake-up request and to send a command to the active star element, said command being a command to re-enable the branch in the selective-sleep mode,
and wherein the active star element is arranged to monitor for said wake-up event by monitoring for said command from the microcontroller.

6. A communication system according to claim 2,
wherein the wake-up event comprises a wake-up pattern received from a node within said branch.

7. A communication system according to claim 1,
wherein at least one of the branches comprises a further active star element.

8. A vehicle comprising a communication system according to any of the preceding claims.

9. A method for communicating between nodes in a communication system,
the communication system comprising an active star element and at least two branches, wherein each branch comprises at least one of the nodes,
**characterized in that** the active star element puts a branch into a selective-sleep mode by blocking the communication to each node within said branch.

10. A method for communicating according to claim 9,
wherein the active star element blocks the communication by not forwarding messages from other branches to any node within said branch as long as said branch is in the selective-sleep mode.

11. A method for communicating according to claim 9,
wherein the active star element monitors for a wake-up event relating to at least one node within said branch when said branch is in the selective-sleep mode.

12. A method for communicating according to claim 11,
wherein the active star element re-enables said branch after receipt of the wake-up event.

13. A method for communicating according to claim 11,
wherein the wake-up event comprises a wake-up request received from a node within an active branch.

14. A method for communicating according to claim 13,
wherein a microcontroller processes the wake-up request and sends a command to the active star element, said command being a command to re-enable the branch in the selective-sleep mode,
and wherein said monitoring by the active star element is realized by monitoring for said command from the microcontroller.

15. A method for communicating according to claim 11,
wherein the wake-up event comprises a wake-up pattern received from a node within said branch.
